# EUROPEAN PATENT APPLICATION

(11) **EP 3 267 074 A1**
(43) Date of publication of application: **10.01.2018**
(21) Application number: 17176144.8
(22) Date of filing: 14.06.2017
(51) Int. Cl.: F16H 57/04

(54) **UTILITY VEHICLE LUBRICATION AND COOLING**

(30) Priority: 06.07.2016 GB 201611779
(71) Applicant: AGCO International GmbH, 8212 Neuhausen am Rheinfall (CH)
(72) Inventor: Reitemann, Gabriel, 87616 Marktoberdorf (DE)
(74) Representative: AGCO Intellectual Property Department

(57) **Abstract**

A utility vehicle has a lubrication system including first and second axle housings of the vehicle providing respective first (52) and second (62) reservoirs of lubricating fluid. A pump (54) draws lubricating fluid from the first reservoir (52) and sends it via a supply line (72) to the second axle housing. A return line (74) permits the passage of lubricating fluid from the second reservoir (62) to the first (52) when a level of lubricating fluid in the second reservoir exceeds a predetermined level. A pressurised gas source (76) such as an air pump pressurises the second axle housing such as to force lubricating fluid into the return line (74) when the predetermined level is exceeded. A cooling system (30, 42) is provided to regulate the temperature of lubricating fluid in at least one of the supply line (72) and the return line (74).

## Description

The present invention relates to lubrication and cooling systems for utility vehicles, such as self-propelled agricultural machines, and more particularly to arrangements for cooling working fluids such as lubricants and hydraulic fluids.

In operation of a utility vehicle such as a farm tractor, it is important to manage liquid levels in components such as gearboxes and clutch assemblies. As noted in European patent EP 0 644 370 B1, too little oil in a clutch assembly may result in damage to moving parts due to lack of lubrication whereas too much oil may result in inefficient operation and overheating of the clutch and cavitation of the oil. To address the problem of over-filling, EP 0 644 370 B1 describes an arrangement in which an oil discharge line is provided at a height within the clutch housing determined by the optimum oil level under static conditions, and pressurised air is introduced to the housing to drive surplus oil into the discharge line and back to a reservoir when the optimum level is exceeded.

In accordance with the invention there is provided a utility vehicle having a lubrication system comprising first and second axle housings of the vehicle providing respective first and second reservoirs of lubricating fluid;
a first pump coupled to, and operable to draw lubricating fluid from, the first reservoir;
a delivery/supply line connected to deliver lubricating fluid from the pump to the second axle housing;
a return line coupled to permit the passage of lubricating fluid from the second reservoir to the first when a level of lubricating fluid in the second reservoir exceeds a predetermined level;
a pressurised gas source connectable to introduce pressurised gas to the second axle housing such as to force lubricating fluid into the return line when the level of lubricating fluid in the second reservoir exceeds said predetermined level; and
a cooling system operable to affect the temperature of lubricating fluid in at least one of the supply line and the return line.

The pressurised gas source may be connected to pressurise the second axle housing or, more preferably, it may be connected in the manner of a mammoth pump or air lift pump to inject pressurised gas into the return line to draw lubricating fluid into the return line.

In such a utility vehicle the cooling system suitably comprises:
- a first fluid circuit including a first fluid;
- a second fluid circuit including a second fluid;
- a heat exchanger coupled into both the first and second fluid circuits enabling transfer of heat from one of the first and second fluids to the other;
- a fluid cooler in the first fluid circuit, and
- a fan arranged to direct an airflow towards the fluid cooler,
wherein the second fluid circuit includes the first pump, supply line and return line, and wherein the second fluid is the lubricating fluid.

The fan may be a hydraulically driven device connected in the first fluid circuit and driven by flow of the first fluid. With such an arrangement, the fan speed may be controlled by regulation of the flow rate of the first fluid, which in turn permits regulation of the temperature of the first fluid. With regulation of the temperature of the first fluid, the temperature of the second fluid (suitably lubricating fluid in the delivery/supply line) may be controlled through the operation of the heat exchanger.

The pressurised gas source is suitably a further pump arranged to take in ambient air and output the same under pressure.

Preferably, the first fluid is a hydraulic fluid and the vehicle includes a hydraulic fluid circuit comprising:
- a reservoir of said hydraulic fluid;
- a variable displacement pump arranged to draw hydraulic fluid from the reservoir and output the same under pressure;
- one or more consumers mounted to the vehicle and coupled to receive pressurised hydraulic fluid from the pump;
- a return line coupled to return hydraulic fluid from the one or more consumers to the reservoir. In such an arrangement, the first fluid circuit and hydraulic fluid circuit may share a common reservoir, and may further share a common return line to the reservoir, which return line includes at least one filter.

Further advantages of the invention will become apparent from reading the following description of specific embodiments with reference to the appended drawings in which:-
Figure 1 is a representation of a tractor;
Figure 2 shows an embodiment of a cooling and lubrication system for the tractor of Fig.1; and
Figure 3 shows a further embodiment of a cooling and lubrication system for the tractor of Fig.1.

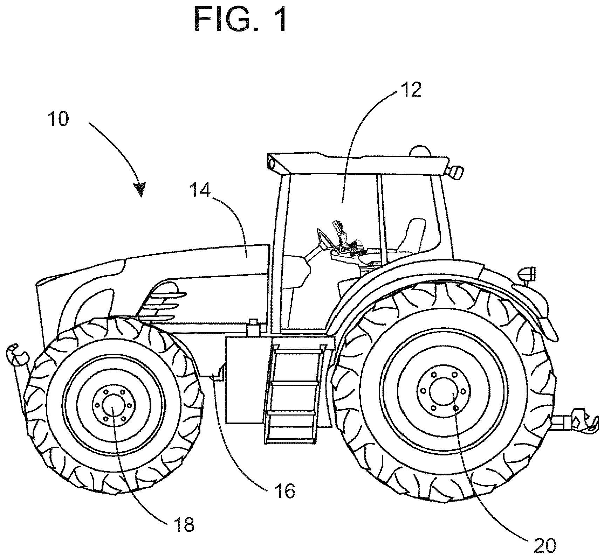

Referring to Figure 1, a utility vehicle in the form of a tractor 10 is shown having a cab 12 and an engine compartment 14. A chassis 16 which is partly visible connects front wheel suspension and steering assembly 18 and rear axle assembly 20.

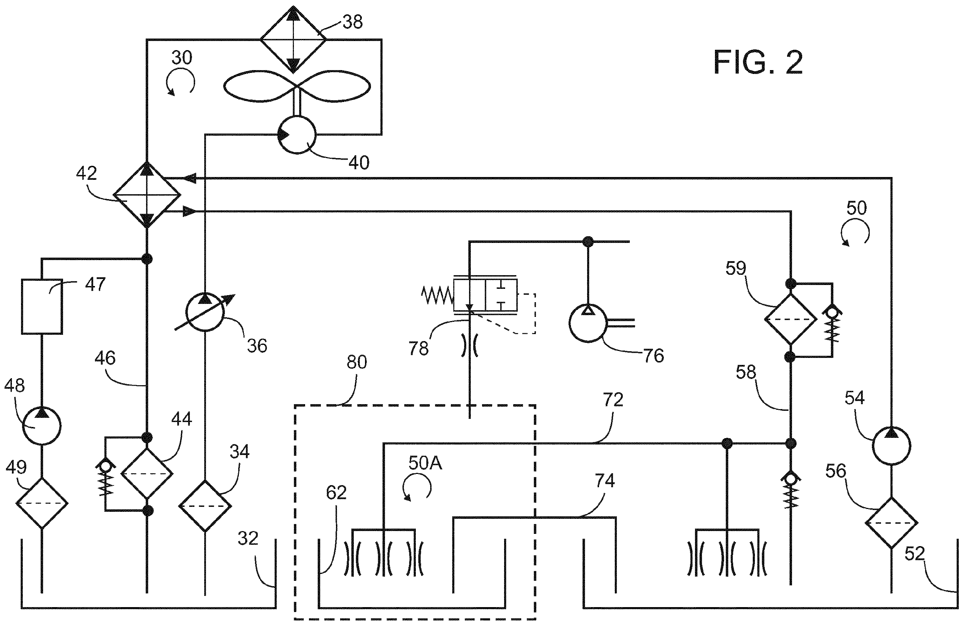

Figure 2 shows an embodiment of a cooling and lubrication system for the tractor of Fig.1. A first fluid circuit represented generally at 30 carries a first fluid in the form of hydraulic fluid drawn from a first reservoir 32 via a first filter 34 by variable rate pump 36. The first circuit includes a fluid cooler 38 in the form of an oil-air heat exchanger. A hydraulically driven fan 40 is included in the first circuit, upstream of the fluid cooler 38 and driven by the flow of hydraulic fluid in the circuit 30. Downstream of the fluid cooler 38 there is a further heat exchanger 42 (described in further detail below) and a further filter 44 in a fluid return line 46 to the reservoir 32.

The fan 40 is directed towards the fluid cooler 38. By varying the speed of the fan 40, by control of the fluid flow rate delivered by pump 36, the temperature of the hydraulic fluid flowing in circuit 30 towards heat exchanger 42 may be regulated.

The reservoir 32 is also shared by a working hydraulic circuit for the tractor 10, whereby a fixed displacement pump 48 provides a supply of pressurised fluid via filter 49 to operate one or more consumers 47 (such as hydraulic lifting cylinders of a front linkage) mounted to the tractor. The working hydraulic circuit may return the fluid directly to the reservoir 32 or, as shown, may share the return line 46 and filter 44 with the first circuit 30.

A second fluid circuit represented generally at 50 carries a second fluid in the form of a transmission lubricant drawn from a second reservoir 52 provided by a differential housing of the rear axle assembly 20 of the tractor 10. A fixed displacement pump 54 draws the lubricant from the reservoir 52 via a filter 56 and pumps it through the further heat exchanger 42 in the first circuit 30 before returning to the reservoir 52 via return line 58 including filter 59. The further heat exchanger 42 is an oil-oil heat exchanger allowing the transfer of heat between the liquids of the first and second circuits 30, 50. Control of the speed of the fan 40 in the first circuit 30 is thereby used to regulate the temperature of the fluid (lubricant) in the second circuit 50.

In a branch of the second fluid circuit 50 (indicated generally at 50A), a supply line 72 carries lubricant from the downstream side of the heat exchanger 42 to a third reservoir 62 provided by the axle housing of the front wheel suspension and steering assembly 18 of the tractor 10. A return line 74 carries surplus lubricant from the third reservoir 62 back to the second reservoir 52. The outflow opening from the third reservoir 62 into the return line 74 is positioned to allow flow into the line 74 when a level of lubricating fluid in the second reservoir exceeds a predetermined level, to avoid draining of the third reservoir 62 when the tractor is traversing an incline. To urge the surplus lubricant along the return line 74, a pressurised gas source 76 is connectable via a pressure reduction valve or orifice 78 to introduce pressurised gas to the front axle housing (represented by dashed line 80) such as to force the lubricating fluid into the return line when the level of lubricating fluid in the third reservoir 62 exceeds the predetermined level. The pressurised gas source 76 is suitably a further pump arranged to take in ambient air and output the same under relatively low pressure. Alternatively, the pressurised gas source 76 may be provided by an already available air supply system used to supply air to the tractor brake system or tyre pressure control system, e.g. the air compressor driven by the engine. To avoid pressure build-up, the rear transmission housing includes an air vent (not shown) to exhaust pressurised air introduced to the front axle and carried along return line 74 when the fluid level in the third reservoir 62 is below the predetermined level.

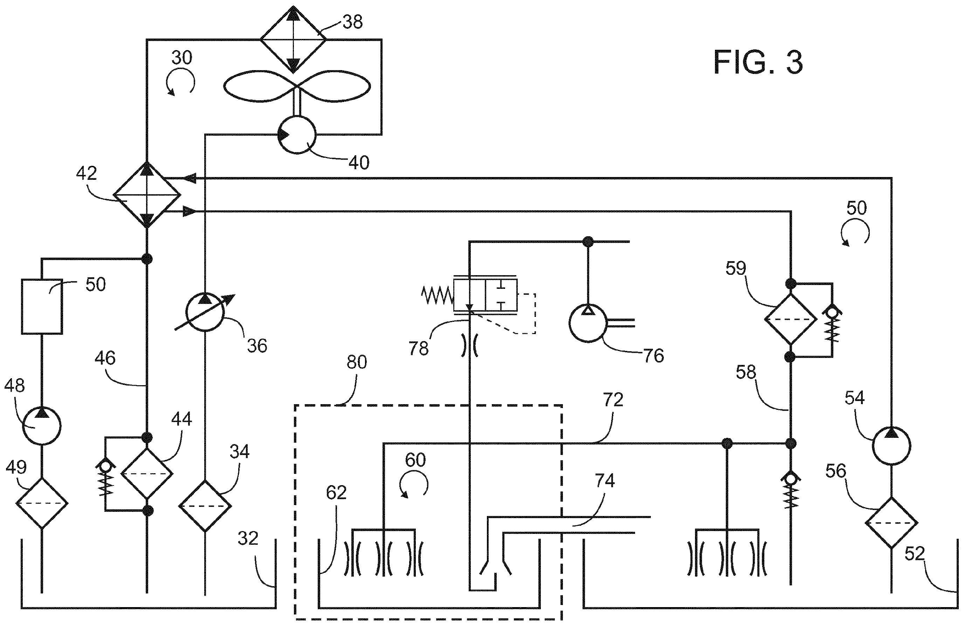

A further embodiment of a cooling and lubrication system for the tractor of Fig. 1 is shown in Figure 3. As most of the components are the same as those shown in Figure 2, only those components which are different will be described below.

Compared to Figure 2, in the second circuit branch 50A the pressurised gas provided by source 76 is not introduced generally into the interior of front axle housing (represented by dashed line 80) but locally into the return line 74. This embodiment is using the principle of a mammoth pump or air lift pump as the air is injected in the lower part of line 74. By buoyancy the air, which has a lower density than the fluid, rises quickly. By fluid pressure, the liquid is taken in the ascendant air flow and moves in the same direction as the air. To increase the effect, return line 74 may be funnel-shaped at the end where the pressurized gas is introduced. This embodiment avoids pressurizing the complete front axle housing which may otherwise result in lubricant fluid being blown out of bearings leading to a risk that they may run dry.

In the foregoing the applicants have described a utility vehicle having a lubrication system including first and second axle housings of the vehicle providing respective first 52 and second 62 reservoirs of lubricating fluid. A pump 54 draws lubricating fluid from the first reservoir 52 and sends it via a supply line 72 to the second axle housing. A return line 74 permits the passage of lubricating fluid from the second reservoir 62 to the first 52 when a level of lubricating fluid in the second reservoir exceeds a predetermined level. A pressurised gas source 76, such as an air pump, either pressurises the second axle housing such as to force lubricating fluid into the return line 74 when the predetermined level is exceeded or introduces air into a lower end of the return line 74 to draw lubricating fluid into the line. A cooling system 30, 42 is provided to regulate the temperature of lubricating fluid in at least one of the supply line 72 and the return line 74.

From reading of the present disclosure, other modifications will be apparent to those skilled in the art. Such modifications may involve other features which are already known in the field of vehicle lubrication and cooling systems and component parts therefore and which may be used instead of or in addition to features described herein. For example, fixed displacement pumps may be replaced by variable displacement pumps or vice versa. Furthermore, fluid filtration or means to bypass heat exchangers or fluid coolers under low temperature conditions may be provided.

## Claims

1. A utility vehicle having a lubrication system comprising first and second axle housings of the vehicle providing respective first (52) and second reservoirs (62) of lubricating fluid;
a first pump (54) coupled to, and operable to draw lubricating fluid from, the first reservoir;
a supply line (72) connected to deliver lubricating fluid from the pump (54) to the second axle housing (62) ;
a return line (74) coupled to permit the passage of lubricating fluid from the second reservoir (62) to the first (52) when a level of lubricating fluid in the second reservoir (62) exceeds a predetermined level;
a pressurised gas source (76) connectable to introduce pressurised gas to at least one of the second axle housing (80) and return line (74) such as to force lubricating fluid into the return line (74) when the level of lubricating fluid in the second reservoir (62) exceeds said predetermined level; and
a cooling system (38, 40, 42) operable to affect the temperature of lubricating fluid in at least one of the supply line (72) and the return line (74).

2. A utility vehicle as claimed in claim 1, the cooling system comprising:
- a first fluid circuit (30) including a first fluid;
- a second fluid circuit (50) including a second fluid;
- a heat exchanger (42) coupled into both the first and second fluid circuits enabling transfer of heat from one of the first and second fluids to the other;
- a fluid cooler (38) in the first fluid circuit, and
- a fan (40) arranged to direct an airflow towards the fluid cooler,
wherein the second fluid circuit (50) includes the first pump (54), supply line (72) and return line (74), and wherein the second fluid is the lubricating fluid.

3. A utility vehicle as claimed in claim 2, wherein the fan (40) is a hydraulically driven device connected in the first fluid circuit (30) and driven by flow of the first fluid.

4. A utility vehicle as claimed in claim2 or claim 3, wherein the pressurised gas source (76) is a further pump arranged to take in ambient air and output the same under pressure.

5. A utility vehicle as claimed in claim 2 or claim 3, wherein the first fluid is a hydraulic fluid and including a hydraulic fluid circuit comprising:
- a reservoir (32) of said hydraulic fluid;
- a pump (48) arranged to draw hydraulic fluid from the reservoir (32) and output the same under pressure;
- one or more consumers (47) mounted to the vehicle and coupled to receive pressurised hydraulic fluid from the pump (48);
- a return line (46) coupled to return hydraulic fluid from the one or more consumers to the reservoir (32).

6. A utility vehicle as claimed in claim 5, wherein the first fluid circuit (30) and hydraulic fluid circuit share a common reservoir (32).

7. A utility vehicle as claimed in claim 6, wherein the first fluid circuit (30) and hydraulic fluid circuit share a common return line (46) to the reservoir, which return line includes at least one filter (44).

8. A utility vehicle as claimed in claim 1, wherein the pressurised gas source (76) is connected to pressurise the second axle housing (80).

9. A utility vehicle as claimed in claim 1, wherein the pressurised gas source (76) is connected to inject pressurised gas into the return line (74) to draw lubricating fluid into the return line.
